(19)

Europäisches
Patentamt
European
Patent Office
Office européen
des brevets

(11) **EP 4 089 149 A1**

(12) **EUROPEAN PATENT APPLICATION**

(43) Date of publication:
**16.11.2022 Bulletin 2022/46**

(21) Application number: **21173061.9**

(22) Date of filing: **10.05.2021**

(51) International Patent Classification (IPC):
**C08L 89/00** $^{(2006.01)}$       **B65D 65/00** $^{(2006.01)}$
**C08L 29/04** $^{(2006.01)}$

(52) Cooperative Patent Classification (CPC):
(C-Sets available)
**C08L 89/00; B65D 65/466; C08L 29/04;
C09D 129/04;** C08L 2205/16           (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich
8092 Zürich (CH)**

(72) Inventors:
• **Bagnani, Massimo
8092 Zürich (CH)**
• **Peydayesh, Mohammad
8092 Zürich (CH)**
• **Mezzenga, Raffaele
8604 Volketswil (CH)**

(74) Representative: **E. Blum & Co. AG
Patent- und Markenanwälte VSP
Vorderberg 11
8044 Zürich (CH)**

(54) **BIOPLASTICS BASED ON AMYLOID FIBRILS AND BIODEGRADABLE POLYMERS**

(57)    The present invention relates to novel composite materials comprising amyloid fibrils and a biodegradable polymer. The invention further provides for environmentally friendly methods to manufacture such composite materials, to articles comprising such composite materials and the use of such composite materials. The composite materials described herein show unexpected beneficial properties, when compared to the individual constituents. These beneficial properties include improved mechanical properties (e.g. flexibility), improved biodegradation, improved antioxidant properties, and beneficial optical properties (high transparency in the visible, combined with UV-blocking) .

EP 4 089 149 A1

**(Cont. next page)**

(52) Cooperative Patent Classification (CPC): (Cont.)

C-Sets
**C08L 29/04, C08L 89/00;**
**C09D 129/04, C08L 89/00**

**Description**

The present invention relates to novel composite materials comprising amyloid fibrils and a biodegradable polymer. The invention further provides for environmentally friendly methods to manufacture such composite materials, to articles comprising such composite materials and the use of such composite materials. The composite materials described herein show unexpected beneficial properties, when compared to the individual constituents. These beneficial properties include improved mechanical properties (e.g. flexibility), improved biodegradation, improved antioxidant properties, and beneficial optical properties (high transparency in the visible, combined with UV-blocking) .

**Background**

Plastic is one of the most abundant man-made materials and, although its widespread use started only 70 years ago, an estimate of 8300 million metric tons (Mt) of plastic have been produced to date. Plastic production was drastically accelerated by the intensive utilization of single-use containers, and packaging is now plastic's largest market. Approximately 150 Mt of solid plastic, corresponding to half of the annual global production, is thrown away each year worldwide. Most polymers used to produce plastics are derived from fossil hydrocarbons, posing a threat to fossil fuel sources. Additionally, most common plastics are not biodegradable and, if not permanently destroyed by proper thermal treatment, accumulate in the natural environment or in landfills causing devastating effects to the planet's ecosystem. Up to 80% of the global plastic waste ends up contaminating the environment, plastic debris is so abundant in the environment that it can be used as a geological indicator of the Anthropocene era.

Although recycling is suggested as a possible solution to some of these problems, this process remains limited to less than 9% of global plastic waste since it is costly, time-consuming, cannot be applied to many polymeric materials. Further, the quality of the polymers obtained by recycling is low.

The replacement of plastics by bioplastics is also suggested as a possible solution to some of these problems. Bioplastics include biodegradable plastics and bio-based plastics.

Bio-based plastics are produced employing renewable resources (such as cellulose, starch, polylactide or polyhydroxy-alkanoates) instead of fossil fuels. For example, US2004/0249065 discloses a method for producing biodegradable plastic from natural materials containing polysaccharides with a basic aqueous solution. Although suitable, the physical properties of the materials obtained are considered insufficient for many applications.

Protein-based biodegradable plastic is attracting attention due to their broad availability, fast biodegradation rates, and their food-grade nature, resulting in films that can even be classified as edible. The major drawbacks of protein-based bioplastic derive from the intrinsic nature of native protein monomers, which are typically globular, hydrophilic, and water soluble. These properties result in difficulties using conventional manufacturing processes, they show poor mechanical and barrier properties and are sensitive to water and humidity.

Accordingly, there is a need to provide advanced materials addressing human needs and considering our environment. There is a further need to replace presently used plastics by more sustainable materials. It would be considered beneficial if these advanced materials are easily available and can be processed using known technology.

**Summary of the invention**

One or more of the above objectives are achieved by the composite material as defined in claim 1 and the manufacturing method as defined in claim 9. Further aspects of the invention are disclosed in the specification and independent claims, preferred embodiments are disclosed in the specification and the dependent claims.

The inventive composite materials ("bioplastics") are optimal candidates to produce shaped articles, such as films. In particular, amyloid fibrils may be used as building blocks for engineering novel bioplastics with targeted characteristics tuned by blending different functional additives such as bio-polymers and additives to improve the performances of the resulting commercial products, such as films. Additionally, other important properties such as water stability, hydrophobicity and antioxidant activity can be tuned by additives, chemical treatment or coatings. These novel bioplastics are characterized by a wide range of properties that can be achieved and tuned to avoid non-biodegradable or toxic compounds. Moreover, these bioplastics show great potential for commercialization with economic viability thanks to the very low cost of the protein used, which are mainly obtained, for example, by waste products of the food industry. Further, the manufacturing of novel composite materials is considered cheap, scalable, and environmentally friendly and specifically suited for film formation. Ultimately, producing bioplastic using food wastes helps food industries for two main reasons: not only it improves their production in terms of sustainability, waste management and valorization, but it also directly improves their circular economy.

The present invention will be described in more detail below. It is understood that the various embodiments, preferences and ranges as provided/disclosed in this specification may be combined at will. Further, depending on the specific embodiment, selected definitions, embodiments, or ranges may not apply.

As used herein, the terms "a", "an,", "the" and similar terms used in the context of the present invention (especially in the context of the claims) are to be construed to cover both the singular and plural unless otherwise indicated herein or clearly contradicted by the context. The term "containing" shall cover "comprising", "essentially consisting of" and "consisting of"

The present invention will be better understood by reference to the figures.

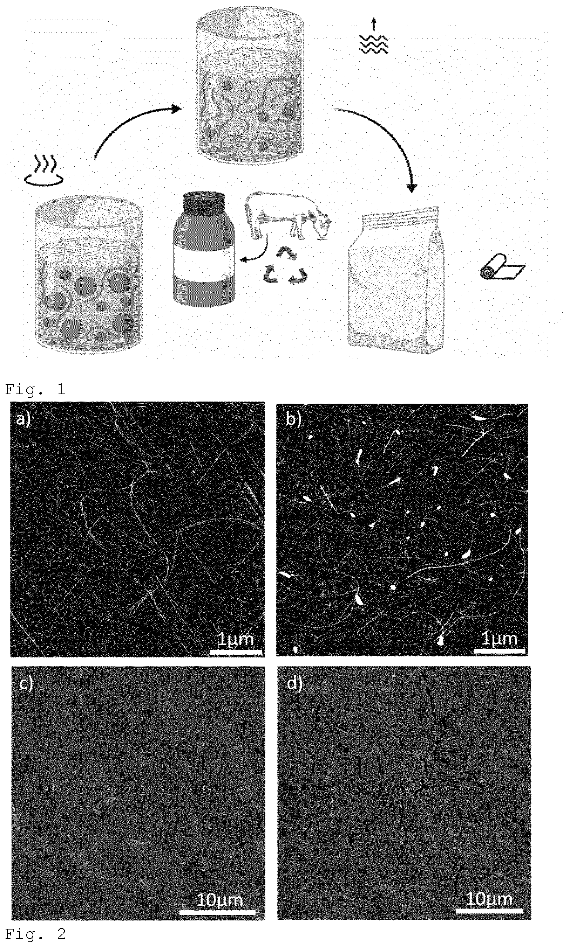

Figure 1 is a schematic representation of the protocol for manufacturing the inventive composites and articles, 2nd aspect of the invention. As an illustrative example, whey protein isolate, Glycerol and PVA are dispersed in water, the solution is heated at 90°C for 5 hours under acidic conditions to allow whey monomers to self-assemble into amyloid fibrils. The solution is cast to obtain bioplastic film through solvent evaporation and subsequently formed into a freestanding film.

Figure 2: Characterization of amyloid fibrils and film surfaces. a) AFM of amyloid fibrils, b) AFM of the mixture of amyloid fibrils, Glycerol and PVA, c) SEM of hybrid amyloid film top surface and d) SEM of hybrid monomer film top surface shows AFM micrographs. In panel a) amyloid fibrils obtained from pure beta-lactoglobulin dispersed in pH 2 Milli-Q water. As a comparison, panel b) shows the amyloid fibrils formed from WPI and in the presence of PVA and glycerol, confirming that the other compounds do not inhibit the self-assembly of beta-lactoglobulin into amyloid fibrils in solution.

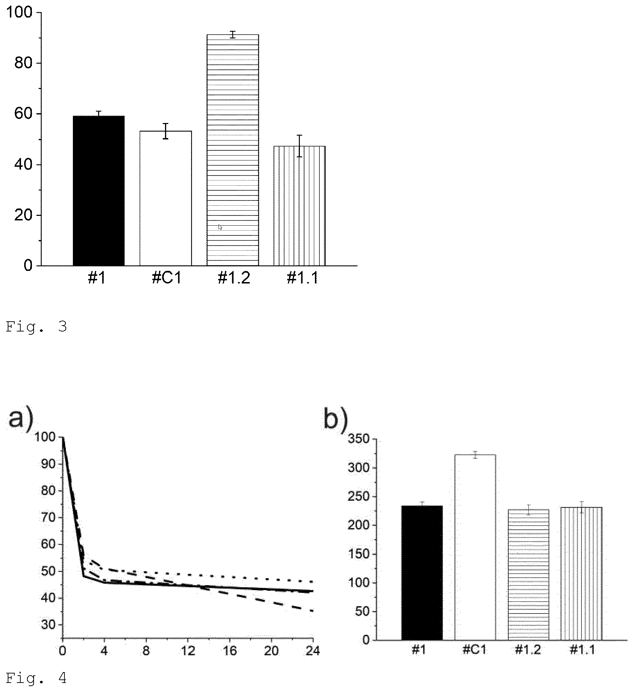

Figure 3. Water contact angle of the films after different crosslinking treatment as explained in the examples. The histogram shows on the y-axis the average contact angle (degree) measured on: composites (inventive, untreated), films made with native WPI monomers (comparison), composites treated with FAS (inventive), and composites treated with CA (inventive). The y-axis is water contact angle (degree), the x-axis is hybrid bio plastic type (black bar: amyloid, white bar: monomer, horizontally sparse bar: amyloid FAS and vertically sparse bar: amyloid CA) .

Figure 4: Water interactions of composites, a) mass change (in %) over time (hrs) and b) water absorption (in %). a) The y axis is mass change (%), the x axis is time (h) (solid line: amyloid, dash line: monomer, dotted line: amyloid FAS and dashed-dotted line: amyloid CA). b) The y axis is water absorption (%), the x axis is hybrid bio plastic type (black bar: amyloid, white bar: monomer, horizontally sparse bar: amyloid FAS and vertically sparse bar: amyloid CA).

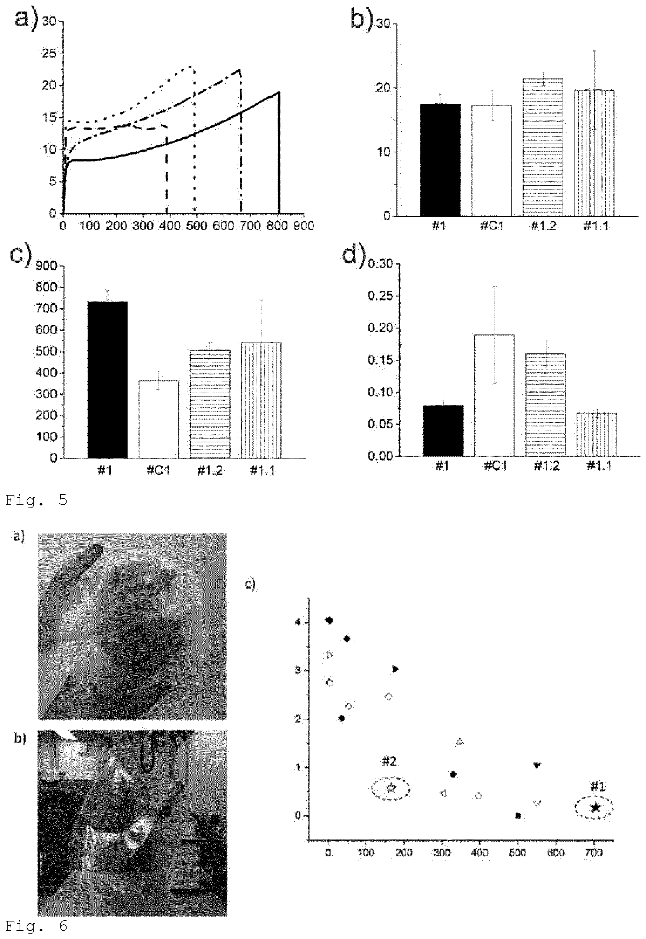

Figure 5: Mechanical properties of composites. a) stress-strain plot, b) maximum stress, c) maximum strain, and d) Young's modulus. a) The y axis is stress (MPa), the x axis is Strain (%) (solid line: amyloid, dashed line: monomer, dotted line: amyloid FAS and dashed-dotted line: amyloid CA). b) The y axis is maximum stress (Mpa), the x axis is hybrid bio plastic type (black bar: amyloid, white bar: monomer, horizontally sparse bar: amyloid FAS and vertically sparse bar: amyloid CA) . c) The y axis is maximum strain (%), the x axis is hybrid bio plastic type (black bar: amyloid, white bar: monomer, horizontally sparse bar: amyloid FAS and vertically sparse bar: amyloid CA). d) The y axis is Young's modulus (GPa), the x axis is hybrid bio plastic type (black bar: amyloid, white bar: monomer, horizontally sparse bar: amyloid FAS and vertically sparse bar: amyloid CA).

Figure 6. Generality, scalability, and comparison. a) Visual appearance of inventive composite amyloid fibrils - MC according to the example. b) scalability example of inventive composites. c) mechanical properties of exemplary inventive composites and commercial plastics. The y axis is Young's modulus (GPa), the x axis is elongation at break (%) (EPOXY: black left triangle, PHB: black hexagon, PEEK: black diamond, Polyester: white right triangle, PET: black right triangle, PS: black up triangle, PLA: white hexagon, PBT: white diamond, PVC: white circle, HIPS: black circle, PP: white up triangle, HDPE: black down triangle, PTFE: right white triangle, PBS: black pentagon, PCL: white pentagon, HDPE: black down triangle, LDPE: white down triangle, EPDM: black square, HAm-MC (#2, INVENTIVE): white star and HAm-PVA (#1, INVENTIVE): black star).

Further details on the figures are provided in the experiments below.

## Detailed description of the invention

In a **first aspect,** the present invention relates to composite materials ("bioplastic", "composites") containing (i.e. "comprising" or "consisting of") amyloid fibrils, a biodegradable polymer and optionally additives.

As further outlined below, these inventive composite materials add value to the circular economy by valorizing, for example, food waste proteins, such as whey, a byproduct of the dairy industry. The results presented herein demonstrate the potential of composite materials comprising amyloid fibrils (e.g. based on whey) and biodegradable polymers as an efficient, sustainable, and inexpensive solution for alleviating the global plastics production and pollution issue.

It is additionally considered particularly advantageous that the inventive composite materials have physical properties, such as elasticity and toughness, superior to the individual components alone. It was surprisingly found that a composite produced by mixing whey amyloid fibrils and PVA showed significantly better properties compared to films produced by either whey amyloid or PVA alone. The composite films (comprising both, amyloid fibrils and polymer) are significantly more flexible and withstand folding better compared to traditional films (comprising PVA or amyloids alone). At the same time, pure amyloid films are characterized by low mechanical stability, resulting in a film that is extremely brittle, fragmented and poorly water stable, limiting their real-world applications in their pure form.

Moreover, by combining protein amyloid fibrils with the polymer, the biodegradation of the resulting composite material is significantly enhanced. Additionally, the inventive composites show antioxidant activity that the biodegradable polymer alone does not possess. Without being bound to theory, it is believed that the high number of amino acids exposed on the surface of amyloid fibrils supports this feature.

Additionally, the composite films show high transparency in the visible, combined with UV-blocking proterties. Amyloid fibrils interact more efficiently with the polymers, thanks to their high degree of functionalities, resulting in a more stable, robust, and homogeneous blending compared to protein monomers.

Hence the properties of the inventive composite materials are far superior to those of the individual constituents and also exceed composite materials comprising protein monomers and polymers.

This aspect of the invention shall be explained in further detail below:

**Amyloid Fibrils:** The term "amyloid fibrils" is generally known in the field and particularly describes fibrils made by proteins or peptides prevalently found in cross beta-sheet secondary structure. Accordingly, the term amyloid fibrils excludes native proteins and other types of non-amyloid protein aggregates.

Amyloid fibrils can be obtained from several different protein sources, collectively amylodogenic proteins, such as vegetable-based proteins and animal-based proteins.

In embodiments, amyloid fibrils are obtained from the group of plant-based proteins, preferably oat, pea, soy, zein, potato, rice, rapeseed.

In embodiments, amyloid fibrils are obtained from the group of animal-based proteins, preferably whey, beta-lactoglobuline, lysozyme, BSA.

As an example, the amyloid fibrils are obtained from whey. Whey is a rich source of proteins whose the most abundant is beta-lactoglobulin, a globular protein that can easily self-assembly into amyloid fibrils. Accordingly, the amyloid fibrils are advantageously obtained from whey. Without being bound to theory, it is believed that a broad range of functionalities characterizes the fibrils obtained from these food proteins and, thanks to their remarkable properties that are far superior to those of single monomers (including high stiffness and aspect ratios) they have been found particularly suitable for preparing the inventive composites described herein. Advantageously, the amyloid fibrils have high aspect ratio, preferably with $\leq$ 10 nm in diameter and $\geq$ 100nm in length, particular preferably $\leq$ 10 nm in diameter and $\geq$ 200nm in length. Advantageously, the amyloid fibrils have a highly charged surface. The term highly charged surfaces is generally known in the field and particularly describes surfaces showing electrophoretic mobilities of the order 2 $\mu$m⍰ cm/V⍰ s at pH 4.

**Polymer:** In line with the present invention, the polymer is biodegradable. The term "biodegradable polymer" is known in the field. It refers to plastics that degrade thanks to the action of microorganisms, such as naturally occurring bacteria, fungi and algae.

Additionally, if a polymer degrades by biological processes into biomass, carbon dioxide, water and inorganic compounds without leaving toxic residues, is defined as "compostable polymer". So, all compostable plastics belong to the group of biodegradable polymers, but not all biodegradable polymers are compostable polymers.

Further, biodegradable polymers distinguish from "bio-based plastics". While bio-based plastics are produced employing renewable resources rather than fossil fuels not all bio-based plastics are biodegradable, such as those converting renewable resources into building blocks for PET. So, biodegradable polymers distinguish from bioplastics in that the latter are not necessarily biodegradable.

In embodiments, the polymer is biodegradable according to one or more of the followingSTANDARDS : ISO 14855 or ISO14851 or ISO14852 or ISO17556 or ISO19679 .

In embodiments, the polymer is compostable according to one or more of the following norms / regulations: EU13432 (PACKAGING) or EU14995 (NON-PACKAGING) or US ASTM D6400 or ISO17088.

In view of the above, a wide range of biodegradable polymers may be used. Advantageously, they comply with the requirements of biodegradability as given above. Given the manufacturing method, soluble polymers are particularly useful. Such polymers include water-soluble polymers and non-water-soluble polymers.

In embodiments, the polymer is selected from the group of water soluble-polymers, including PVA and polysaccharides such as MC.

In alternative embodiments, the polymer is selected from the group of non-water soluble polymers, including Polylactic acid (PLA), Polyglycolide (PGA), Polycaprolactone (PCL) and Poly-3-hydroxybutyrate (PHB).

By combining them with amyloid fibrils to give the composite materials as described herein, the disadvantages of protein-based materials, such as difficult to process, poor mechanical properties, poor barrier properties and sensitivity to water / humidity are mitigated.

In embodiments, the polymer is selected from the group of synthetic polymers, e.g. Polyvinyl alcohols (PVA), such as fully hydrolyzed PVAs. A broad range of molecular weights, as commercially available, may be used in the context or the present invention. Suitable are, for example PVA with 100'000 ≤ Mw ≤ 500'000 such as Mw approx. 200'000. It was found that composites comprising such polymers are easily manufactured and processed. Their mechanical and optical properties are advantageous.

In embodiments, the polymer is selected from the group of natural polymers and modified natural polymers, such as polysaccharides, e.g. Methyl cellulose (MC). A broad range of viscosities, as commercially available, may be used in the context or the present invention. Suitable are, for example MC with 100 cP ≤ viscosity ≤ 1'000 cP such as approx. 400 cP. It was found that composites comprising such polymers are easily manufactured and processed. Their mechanical and optical properties are advantageous.

**Additives:** It is common in the field to include additive for facilitating the manufacturing or to beneficial influence material's properties, e.g. plasticizers. Such additives are commercial items, the type and amount may be selected by the skilled person in line with the intended effect. In embodiments, the additives are selected from biodegradable materials, such as glycerol.

**Composite material:** The term composite material is known in the field. According to the present invention, it refers to a material comprising at least two components, a biodegradable polymer and amyloid fibrils. One or more additives may or may not be present.

In embodiments, the biodegradable polymer and the amyloid fibrils form a homogeneous network matrix and the additives, if present, are distributed within said matrix. In preferred embodiments, the biodegradable polymer and the amyloid fibrils form a homogeneous double network matrix and the additives, if present, are distributed within said matrix.

In embodiments, the amyloid fibrils are distributed randomly within said polymer.

In embodiments, the amount of polymer ranges from 10 to < 66 wt%, preferably ranges from ranges from 20 to < 50 wt%. In embodiments, the amount of amyloid fibrils ranges from ≥ 33 to 90 wt%, preferably ranges from ≥ 50 to 80 wt%. In embodiments, the amount of additives ranges from 0 - 40 wt%, preferably 5 - 35 wt%.

In an embodiment, the invention relates to the use of amyloid fibrils in the manufacturing of biodegradable composite materials.

In addition to the chemical composition, the inventive composite material may be characterized by physical parameters.

Advantageously, the composite material has a broad range of surface hydrophobicity, with water contact angles ranging from 20 to 150 degree, preferably 50 - 120 degree. In embodiments, the water contact angle is above 50 degree. Advantageously, the composite material has a Young's modulus ranging from 0.01 to 4 GPa, depending on the target application and the production process

Advantageously, the composite material has a high degree of transparency ranging from 50 to 99.9% visible light transmittance.

The inventive composite materials may be obtained in various forms, generally referred to as solid shaped articles. This particularly depends on step (c) in the process outlined below and includes self-supporting thin films, coatings on a substrate, granules, pellets or casted blocks. In view of many commercial relevant applications, the preferred form is a film. It is considered advantageous that inventive films are obtainable by processes well known in the field, including solution casting or extrusion methods or by hot press methods.

**Product-by-process:** In a further embodiment, the invention also provides for a composite material obtainable by the method described herein, or obtained according to the method as described herein.

In a <u>second aspect</u>, the invention relates to a method of manufacturing inventive composite materials. Briefly, a composition comprising an amylodogenic protein, for example, beta-lactoglobulin protein, a polymer and optionally additives are combined in solution to obtain an initial dispersion. Upon heating and pH adjustment, self-assembly of protein monomers to amyloid fibrils occurs and all components are solubilized. The thus obtained solution may be shaped, e.g. cast, to form a shaped article, e.g. a film, after solvent evaporation. This method of manufacturing is considered simple, scalable and environmentally friendly. This aspect of the invention is depicted in fig.1 and shall be explained in further detail below, whereby method A is adapted to water soluble polymers and method B is adapted to non-water soluble polymers:

Method a: Advantageously, the inventive method comprises the steps of:

(a) combining a native amylodogenic protein ("protein monomers", e.g. beta-lactoglobulin), biodegradable water soluble polymer, water and optionally acid and optionally additives to obtain an aqueous dispersion; than
(b) converting the protein monomers to amyloid fibrils by application of heat and optionally adjusting the pH to thereby obtain an acidic solution; and

(c) processing the solution by removing the solvent to thereby form a composite material; and optionally
(d) further treatment of the thus obtained composite material to obtain an shaped article.

The individual process steps are known per se, but not yet applied to the specific starting materials and visualized in fig.1. The obtained composite material may be further processed according to methods well established (c.f. step (d) below) . It is considered particularly advantageous that the entire manufacturing is green and eco-friendly.

Method B: Advantageously, the inventive method comprises the steps of:

(a) combining a native amylodogenic protein ("protein monomers", e.g. beta-lactoglobulin), water and optionally acid and optionally additives, to obtain an aqueous dispersion (a-1), combining organic solvent and biodegradable non-water soluble polymer, to obtain an organic solution (a-2); than
(b) converting the protein monomers to amyloid fibrils by application of heat and optionally adjusting the pH to thereby obtain an aqueous solution of amyloid fibrils (b-1), and combining the thus obtained solution (b-1) with the organic solution (a-2) to thereby obtain a combined solution; and
(c) processing the combined solution by removing the solvent to thereby form a composite material; and optionally
(d) further treatment of the thus obtained composite material to obtain an shaped article.

The individual process steps are known per se, but not yet applied to the specific starting materials. It is advantageous if the above organic solvent and water do form a miscible phase.

It is considered particularly advantageous that important properties of the inventive composite material, including density, stiffness and color, may be tuned in s simple way by adjusting the individual process steps.

It is considered particularly advantageous that the method provides composite materials with well-organized structures and unprecedented properties.

It is further considered particularly advantageous that the obtained materials have unique optical properties, such as high transparency.

In embodiments, the invention relates to a method from manufacturing composite materials as described herein in the form of a film. The method is considered scalable and straightforward (as suitable for existing equipment) and environmentally friendly (as water based). Specifically, WPI (whey protein isolate) is dispersed in pH 2 water together with glycerol and a water-soluble polymer selected from PVA or other soluble polymers. The solution is then heated to thereby solubilize all the components homogeneously and convert beta-lactoglobulin protein into self-assembled amyloid fibrils (e.g. 90°C for 5 hours). This solution is cast onto a substrate followed by solved evaporation to thereby obtain freestanding homogeneous and transparent films containing the inventive composite material, with properties superior to those of the individual components.

**Step (a),**

Water soluble polymers: In case the polymer is water soluble, water is used as a solvent. These starting materials are known per se. Combining them and adjusting pH to 0.5 - 4 such as pH = 2 is entirely conventional. Non-Water soluble Polymers: In case the polymer is non-water soluble, an organic solvent for that polymer, such as DMSO, THF, DMF or ethanol is used, either alone or in combination. In this embodiment, amyloid aqueous solution is prepared separately according to (a) and (b); than it is mixed with the biopolymer separately dissolved in a polar solvent and the resulting mixture is subjected to step (c).

**Step (b)**

Converting amylodogenic protein monomers to amyloid fibrils by application of heat and to thereby obtain a solution is a process known in the field. Advantageously, the reaction mixture is stirred. Advantageously, the reaction mixture is heated to 70 - 95 °C for 1 - 10 hours, preferably 90 °C / 5 hrs. This step may be terminated by quenching.

**Step (c)**

Again, processing a solution comprising dissolved polymer into a solid is known in the field. Due to the properties of polymer and amyloid fibrils, common casting and extruding technologies may be applied. Suitably, a thin film is cast and dried under ambient or controlled conditions, e.g. by application of moderate heat and / or reduced pressure.

**Step (d)**

The inventive process may be accomplished by further steps, e.g. preceding step (a) or following step (c), including purification, further processing, assembling and other process steps known to the skilled person. In embodiments, the inventive method comprises one or more finishing steps (d), including chemical treatment e.g. a cross-linking agent in alcoholic solution.

As shown above, the manufacturing is very flexible. The chemical, mechanical and optical properties of the obtained composite materials can be tailored by the changing the preparation conditions such as concentration of precursors, drying temperature and substrate type and texture. For example, hydrophobicity and mechanical stability of inventive composites can be conveniently tuned by chemical treatment inducing crosslinking within the fibrils and polymer domains.

In a **third aspect**, the invention also relates to various uses of the inventive composite materials and to articles comprising or consisting of a composite material as described herein. Compared to other bioplastics, the inventive composite materials present a remarkable water stability and hydrophobic behavior, allowing these materials to be suitable for many applications to thereby replace traditional plastics.

Accordingly, the invention provides for an article, selected from the group consisting of foils, laminates, bags, containers, and tubes.

In embodiments of the invention, the inventive composite material is present as a shaped article, such as a semifinished product. This is typically the case once manufacturing is completed. In this form, the inventive composites are typically in the form of foils or extrudates.

In a further embodiment of the invention, the inventive composite is present as a coating on a substrate. A broad range of substrates may be coated, depending on the intended use of the inventive composite. The coating may be the top coating. Accordingly, the invention also provides for an article comprising a substrate and a coating, said coating consisting of an inventive composite material as described herein. Such articles include packaging materials.

In a further embodiment of the invention, the inventive composite is present as a packaging material, particularly as a packaging material for fresh food products; as a packaging material for beverages including hot and cold beverages; as a packaging material for processed food / pre-cooked products; as a packaging material for snack products, as a packaging material for non-food products, such as electronics, or clothes.

To further illustrate the invention, the following **examples** are provided. These examples are provided with no intent to limit the scope of the invention.

**Starting Materials, Commercially available**

Whey protein isolate (**WPI**) was supplied from Fonterra, New Zealand. Polyvinyl alcohol (**PVA**, fully hydrolyzed, Mw approx. 200000) and Hydrochloric acid (36%) were purchased from Merck. Methyl cellulose (**MC**) (viscosity: 400 cP), Glycerol ($\geq$99.5%), Citric acid (**CA**) ($\geq$99.5%), 1H,1H,2H,2H-Perfluorooctyltriethoxysilane (**FAS**), 2,2'-azinobis(ethyl-2,3-dihydrobenzothiazoline-6-sulfonic acid) diammonium salt (**ABTS**), and Tenax® porous polymer adsorbent (60-80 mesh) were provided from Sigma Aldrich

**Composite materials in the form of a film**

example 1, HAm-PVA: For fabricating hybrid amyloid (HAm) fibrils film, 4 g of WPI first was dissolved in 100 ml of water. Then the pH of the solution was adjusted to 2 and 2 g of Glycerol, as a plasticizer, was dispersed in the solution. For hybrid amyloid fibrils films with PVA and MC, 2 g of each compound was added to the solution. To convert the WPI monomers to amyloid fibrils and dissolving the biodegradable polymer, the solution was stirred and heated at 90 °C for 5 h. After the incubation, the solution cast immediately on a petri dish to dry at room temperature.

example 1.1, HAm-PVA treated with CA: For the study of the effect of CA in film properties, 1.5 g of it was added to solutions before the fibrilization process.

example 1.2, HAm-PVA coated with FAS: Moreover, for fabricating more hydrophobic films, they were placed in an ethanolic solution containing FAS (0.5 wt %) for 1 h. Subsequently, the films were dried under room temperature to obtain the FAS-coated hybrid amyloid films.

example 2: HAm-MC: The generality of the approach for fabricating different composite materials, PVA is replaced by Methylcellulose (MC, methyl ether of cellulose), cf. fig. 6.

Panel a: As shown in this panel, the resulting HAm-MC film is smooth, flexible, and transparent. While both PVA and MC are biodegradable polymers, MC has the advantage of being from biosources and more sustainable. However, the water stability of native MC hybrid amyloid fibrils film is lower than the ones with PVA.

Panel b: demonstrates the scalability of the hybrid whey amyloid fibrils bioplastic by its production on a larger scale. This panel shows the inventive composite material in the form of a bioplastic film with the size of 1.5 m×1.5 m, produced successfully via a simple solution-casting process.

Panel c: compares the mechanical properties of the inventive films based on PVA and MC against different engineering, thermosets, rubbers, and biodegradable plastics. As observed, although both bioplastics in this work have similar elastic modulus, HAm-PVA has a higher elongation value compared to HAm-MC, reaching the value of 750%. This excellent strain value places the HAm-PVA film among the toughest plastics. On the other hand, the young modulus of the inventive films is in the range of PTFE, PBS, PCL, LDPE, and EPDM.

The details of composition and treatment are listed in Table.1.

Table.1. Bioplastic Films composition in dry mass

| Bioplastics | Whey amyloid wt. % | Whey monomer wt.% | PVA wt. % | MC wt. % | Gly wt. % | CA wt. % | FAS treatment |
|---|---|---|---|---|---|---|---|
| **inventive** | | | | | | | |
| #1, Hybrid amyloid | 40 | - | 30 | - | 30 | - | No |
| #1.1, Hybrid amyloid-CA | 35 | - | 26 | - | 26 | 13 | No |
| #1.2, Hybrid amyloid-FAS | 40 | - | 30 | - | 30 | - | Yes |
| #2, Hybrid amyloid-MC | 44 | - | - | 23 | 33 | - | No |
| **comparative:** | | | | | | | |
| #C1, Hybrid monomer | - | 40 | 30 | - | 30 | No | No |

## Characterization

To characterize the **morphologies** of amyloid fibrils and their composite materials in the form of films, Atomic force microscopy (AFM) and scanning electron microscopy (SEM) were used. For AFM, the solutions were dried onto cleaved mica and analyzed by applying the tapping mode. A Hitachi SU5000 scanning electron microscope characterized the structure and properties of hybrid bioplastic films. Small pieces of films were attached to stubs with paste and sputter-coated with 5 nm of platinum/palladium under planetary rotational movement (Safematic, CCU- 10, Switzerland) before imaging.

**Fig. 2** verifies that amyloid fibrils self-assembly is not inhibited by the other compounds in solution (glycerol and PVA and other compounds contained in WPI), atomic force microscopy (AFM) has been used to image the solution resulting after the heat treatment.

Panel A: amyloid fibrils obtained from pure beta-lactoglobulin dispersed in pH 2 Milli-Q water.

Panel B: amyloid fibrils formed from WPI and in the presence of PVA and glycerol, confirming that the other compounds in solution do not inhibit the self-assembly of whey monomers into amyloid fibrils. The main difference between the fibrils obtained regards their contour length distribution that decreases when amyloids are produced in the other compounds' presence.

Pane C and D: SEM images of the surface of the inventive composites and composites of protein monomer are presented. As shown in the figure, the amyloid-based films' surface is smooth, homogenous, and without cracks. However, the surface of the films obtained with WPI monomers shows multiple cracks spanning several micrometers. These cracks increase the oxygen and vapor transport through the films, resulting in films that might not be suitable for food packaging. On the contrary, films of the inventive composites are characterized by a highly homogeneous surface. Without being bound to theory, this may be attributed to the high degree of interactions between amyloid fibrils, the plasticizer (Glycerol), and the polymer chains (PVA), favored by the very high aspect ratio of amyloid fibrils combined with the numerous functional groups on their surface. Surprisingly, most of the properties of the hybrid composites were found superior to films produced by either the amyloid or the polymer components alone. Firstly, the mechanical properties, in terms of flexibility, stability and processability improve compared to the individual components. Additionally, the hybrid film showed high degree of functionalities, such as antioxidant activity and improved surface properties.

The **mechanical properties** of films were evaluated by measuring tensile strength and elongation using a Z010 (Zwick) equipped with a 100 N load cell. The stress ($\sigma$)-strain ($\varepsilon$) curves were obtained at room temperature. The Young's modulus was calculated from the stress-strain curves. **Fig. 5** presents the mechanical properties of the hybrid whey amyloid, WPI monomer (comparative), amyloid FAS-coated and CA containing films.

Panel a: As observed in stress-strain curves, fibrillization, combination, and coating directly affect the mechanical properties of the films.

Panels b - d: The maximum stress at break, ultimate elongation, and Young's modulus values are presented. The maximum stress of pure amyloid hybrid film is 17 MPa, similar to the value for monomer hybrid film. However, as depicted in panel c, the elongation of hybrid amyloid films (inventive) is improved at least two orders of magnitude compared to hybrid monomer film (comparative). Without being bound to theory, it is speculated that the better elongation of the amyloid hybrid film is attributed to good alignment of nanofibril chains, making the interfibrillar slippage and molecular rearrangement easier. The excellent elongation of hybrid films is a fascinating property for food packaging applications. However, this property leads to a lower Young's modulus value for amyloid fibrils hybrid films than monomer hybrid films (panel d). Furthermore, it appeared that although coating and hybridizing the films with FAS and CA, respectively, improve the maximum stress and Young's modulus, they decrease the film strain, resulted in rigid and less flexible films. This phenomenon is believed to be due to the crosslinking effect and limited mobility of whey amyloid fibrils chain after the addition of CA or coating with FAS.

The **water contact angle** of the films was recorded by Nikon D300 digital camera at 25°C and relative humidity of 50%. To shed light on the interaction of films with water, their weight loss, and water absorption after immersing in the water and at different time intervals were measured.

**Fig. 3:** To determine the hydrophobicity of amyloid-based films, static water contact angle analysis was performed. The contact angle varies highly depending on the composition and the chemical treatment. In particular, the film's contact angle formed by native WPI monomers is the smallest one, confirming the hydrophilic nature of this species. However, the contact angle measured on amyloid fibril-based film resulted in a more hydrophobic nature compared to the monomer-based ones. The chemical crosslinking treatment using FAS, resulted in films with a surface characterized by a super-hydrophobic nature, with contact angles above 90°. The film containing CA, showed the lowest contact angle measured, even compared to protein monomers.

The **interaction with water** is further investigated and the results are summarized in **Fig. 4.**

Panel a: For all the samples, a substantial mass release of about 50% has been measured on all the films after 2 hours of water immersion. However, after this first water immersion, the mass loss measured in all the film containing amyloid fibrils decreased drastically within the first 3 hours, while later, no substantial mass loss was observed up to 24 hours. The major component released in water by the films is suspected to be mainly the plasticizer due to the high water solubility of this compound. This is further confirmed by the fact that the films appeared much more brittle compared to the same films before water immersion. At the same time, the film composed by WPI native monomers showed a continuous mass loss during all the time tested, up to full film dissolution (not shown in the figure). Panel b: The water adsorption measurements resulted in very similar behavior in the films based on amyloid fibrils independently by the treatment and all the films absorbed around 225% of water after 24 hours of immersion. The swelling, however, increased significantly in the film obtained by WPI monomers, reaching water adsorption values of around 325%. The low performances of monomer based films are supposed to be related to the hydrophilic nature of the protein native state but also to the surface properties of these films that, as already discussed above (see also fig. 2 and 3), are characterized by a hydrophilic, inhomogeneous and fractured surface confirming the highest performances of amyloid fibrils compared to native monomers.

The **antioxidant activity** of film was determined by the spectrophotometric method described by Kusznierewicz et al. Briefly, the stock solution of ABTS with the concentration of 7 mM was diluted with water to display the absorbance of 0.7 at 734 nm. Then 4.5 mL of ABTS solution was combined with a piece of film (10 mg). After 20 min reaction time, the film was removed, and the solution was transferred to a cuvette, and its absorbance was measured at 734 nm with the use of a UV-vis spectrophotometer (Cary 100, Agilent Technology). Finally, the amount of ABTS radicals scavenged by 1 g of the film was calculated based on the Beer-Lambert-Bouguer Law:

$$Sc_{ABTS} = \frac{V_{ABTS} \times (A_0 - A_f) \times 1000}{\varepsilon \times l \times m}$$

where, ScABTS is the amount of scavenged ABTS ($\mu$mol), VABTS is the volume of stock solution of ABTS added to the film (mL), A0 is the absorbance of the initial ABTS solution; Af is the absorbance of the radical solution after reaction time; $\varepsilon$ is the ABTS molar extinction coefficient (16,000 M-1 cm-1 at 734nm), 1 is the optical path of the cuvette (1 cm) and m is the film mass (g) 33.

The inventive hybrid amyloid fibril films showed excellent antioxidant activity by scavenging 150-300$\mu$mol ABTS/g.

The **food-contact migration properties** of the bioplastic films were evaluated based on EU technical guidelines for compliance testing in the framework of the plastic FCM Regulation (EU) No 10/201134. To assess the possible migration of molecules from the films to the food, Tenax® was used as a dry food simulant. In a clean glass petri dish, a square-shape film with a dimension of 2 cm was placed between two layers of Tenax® powder (40 mg below and 40 mg above the sample) and stored in the oven for 2 h at 70 °C. The overall food migration was calculated by the mass difference of Tenax® before and after the treatment resulting in migration values below the EU limit.

**Conclusion**

As clearly shown by the examples and data provided, amyloid fibrils are a suitable building block for developing composite materials jointly with a biodegradable polymer. To do so, in situ fibrilization of protein monomers, e.g. whey, took place in the presence of a plasticizer and a biodegradable plastic, such as PVA and MC. The resultant films were transparent, flexible, and exhibited mechanical and water stabilities superior to the individual components. The films can be prepared from cheap bio-based and biodegradable sources, point to their affordability and environment friendliness for a broad range of applications.

**Claims**

1. A composite material comprising amyloid fibrils, a polymer and optionally additives, **characterized in that**

   - said amyloid fibrils are distributed within said polymer; and
   - said polymer is biodegradable.

2. The composite material according to claim 1, wherein

   - the amount of polymer is 10 to < 66 wt%, preferably ranges from ranges from 20 to < 50 wt%;
   - the amount of amyloid fibrils is $\geq$ 33 to 90 wt%, preferably ranges from $\geq$ 50 - 80 wt%;
   - the amount of additives ranges from 0 - 40 wt%, preferably 5 - 35 wt%,

   in each case based on dry wt%.

3. A composite material according to claim 1, wherein said polymer

   - is biodegradable according to one or more of the following standards: ISO14855, ISO14851, ISO14852, ISO17556 or ISO19679; or
   - is compostable according to one or more of the following norms / regulations: EU 13432 PACKAGING, EU 14995 NON-PACKAGING, US ASTM D6400 or ISO17088.

4. The composite material according to any of the preceding claims, wherein said biodegradable polymer is selected from

   - the group of synthetic polymers, preferably PVA; or
   - the group of natural polymers and modified natural polymers, preferably celluloses.

5. The composite material according to any of the preceding claims, wherein said amyloid fibrils

   - are obtained from the group of plant-based proteins, preferably from oat, pea, soy, zein, potato, rice, rapeseed and other amylodogenic proteins; and / or
   - are obtained from the group of animal-based proteins, preferably from whey, beta-lactoglobuline, lysozyme, BSA, and other amylodogenic proteins; and / or
   - have high aspect ratio, preferably with $\leq$ 10 nm in diameter and $\geq$ 100nm in length, and / or
   - have highly charged surfaces, preferably electrophoretic mobilities of the order of 2 $\mu$m·cm/V·s at pH 4; and / or

- are homogeneously distributed within said polymer.

6. The composite material according to any of the preceding claims, wherein said additives are selected from

- plasticizers, particularly glycerol, sorbitol ;
- crosslinkers, particularly GA (Glutaraldehyde);
- acids, particularly citric acid, boric acid, HCl;
- antibacterial compounds, particularly silver, sodium azide;
- hydrophobic agents, particularly waxes, FAS.

7. The composite material according to any of the preceding claims, complying with one or more of the following characteristics:

- the polymer and the amyloid fibrils form an homogeneous network matrix;
- the composite material has a water contact angle of 20-150 degree, preferably 50 - 120 degree;
- the composite material has a transparency of at least 50-99.9% in the visible (e.g. at 660 nm);
- the composite material has a Young's modulus in the range of 0.01-4 GPa.

8. The composite material according to any of the preceding claims, in the form of

- a self-supporting film;
- a coating on a substrate or on an article
- granules or pellets or blocks.

9. A method for manufacturing a composite material according to any of the preceding claims, said method comprising the steps of:

- Method A for water soluble polymers -

(a) combining amylodogenic protein, biodegradable polymer, water and optionally acid and optionally additives, to obtain an aqueous dispersion; than
(b) converting the amylodogenic protein to amyloid fibrils by application of heat to thereby obtain an acidic solution; and
(c) processing the solution by removing the solvent to thereby form a solid composite material; and optionally
(d) further treatment of the thus obtained composite material to obtain an shaped article; OR

- Method B for non-water soluble polymers -

(a) combining amylodogenic protein, water and optionally acid and optionally additives, to obtain an aqueous dispersion (a-1), combining organic solvent and non-water soluble polymer to obtain an organic solution (a-2); than
(b) converting the amylodogenic protein to amyloid fibrils by application of heat to thereby obtain an aqueous solution of amyloid fibrils (b-1), and combining the thus obtained solution (b-1) with the organic solution (a-2) to thereby obtain a combined solution; and
(c) processing the combined solution by removing the solvent to thereby form a solid composite material; and optionally
(d) further treatment of the thus obtained composite material to obtain a shaped article.

10. The method according to claim 9, wherein

- in step (a): the pH is adjusted to 0.5 - 4 preferably 2; and / or
- in step (a), the amylodogenic protein is seleced from plant-based proteins, preferably from oat, pea, soy, zein, potato, rice, rapeseed, or the amylodogenic protein is selected from animal-based proteins, preferably from whey, beta-lactoglobuline, lysozyme, BSA,;
- in said step (b) the reaction mixture is heated to 50-95 °C for 1-10 h, preferably 90°C / 5 h; and /or
- in said step (b) the reaction mixture is stirred
- In said step (c) the reaction mixture is quenched and cast and water is evaporated.
- in said step (d) the obtained composite materials are chemically treated with a cross-linking agent in alcoholic solution.

11. The method according to any of claims 9 to 10, additionally comprising one or more further steps (d) ; preferably where in said step (d) the obtained composite materials are chemically treated with a cross-linking agent.

12. A composite material obtainable by, or obtained according to the method of any of claims 9 to 11.

13. An article comprising, or consisting of, a composite material according to any of claims 1 to 9 or 12.

14. The article of claim 13, selected from the group consisting of foils, laminates, bags, containers, and tubes.

15. Use of a composite material according to any of claims 1-9 and 12 as a packaging material, particularly

- as a packaging material for fresh food products;
- as a packaging material for beverages including hot and cold beverages;
- as a packaging material for processed food / pre-cooked products;
- as a packaging material for snack products;
- as a packaging material for non food products, including electronics, and clothes.

Fig. 1

Fig. 2

Fig. 3

Fig. 4

Fig. 5

Fig. 6

Europäisches
Patentamt

European
Patent Office

Office européen
des brevets

## EUROPEAN SEARCH REPORT

Application Number

EP 21 17 3061

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SARAH M. PILKINGTON ET AL: "Amyloid fibrils as a nanoscaffold for enzyme immobilization", BIOTECHNOLOGY PROGRESS, vol. 26, no. 1, 13 November 2009 (2009-11-13), pages 93-100, XP055573685, ISSN: 8756-7938, DOI: 10.1002/btpr.309 * abstract; page 93, col.2, para.2-page 94, col.1, para.1; page 95, col.1, para.2 * | 1-15 | INV.<br>C08L89/00<br>B65D65/00<br>C08L29/04 |
| X | SHIVA P. RAO ET AL: "Amyloid fibrils as functionalizable components of nanocomposite materials", BIOTECHNOLOGY PROGRESS, vol. 28, no. 1, 14 October 2011 (2011-10-14), pages 248-256, XP055573778, ISSN: 8756-7938, DOI: 10.1002/btpr.726 * abstract; page 248, col.1, para.1-col.2, para.1; page 249, col.1, para.3 * | 1-15 | |
| X | NOLENE BYRNE ET AL: "The preparation of novel nanofilled polymer composites using poly(-lactic acid) and protein fibers", EUROPEAN POLYMER JOURNAL, PERGAMON PRESS LTD OXFORD, GB, vol. 47, no. 6, 8 December 2010 (2010-12-08), pages 1279-1283, XP028209526, ISSN: 0014-3057, DOI: 10.1016/J.EURPOLYMJ.2010.12.002 [retrieved on 2010-12-22] * abstract; paragraph 2.1 * | 1-15 | TECHNICAL FIELDS SEARCHED (IPC)<br><br>C08L<br>C09J<br>B65D |

The present search report has been drawn up for all claims

| Place of search | Date of completion of the search | Examiner |
|---|---|---|
| Munich | 29 September 2021 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20040249065 A